# EUROPEAN PATENT SPECIFICATION

(11) **EP 0 634 039 B1**
(45) Date of publication and mention of the grant of the patent: **04.02.1998**
(21) Application number: 93908221.0
(22) Date of filing: 23.03.1993
(51) Int. Cl.: G07C 1/30

(54) **PARKING SYSTEM**
PARKSYSTEM
SYSTEME DE PARCAGE

(30) Priority: 31.03.1992 SE 9201001
(43) Date of publication of application: 18.01.1995
(73) Proprietor: JONSSON, Tommy, S-942 34 Älvsbyn (SE)
(72) Inventor: JONSSON, Tommy, S-942 34 Älvsbyn (SE)
(74) Representative: Nilsson, Karl Ingvar
(86) International application number: SE9300243
(87) International publication number: WO9320539

(56) References cited:
- EP-A- 0 006 079
- EP-A- 0 323 326
- WO-A-84/01073
- US-A- 4 555 618

## Description

The present invention relates to a vehicle parking system according to the preamble of claim 1. A parking system encompassed by said preamble is previously known through US-A-4 555 618.

Pay parking spaces are found in all densely populated areas, without exception. Various systems are found in which a given fee is paid for an intended parking period, this fee being deposited in cash into a parking meter located at each parking space, or into a central parking ticket dispenser which serves a vehicle parking area and which issues a parking ticket disclosing the period for which a parking fee has been paid, this ticket being placed in the vehicle in a position where it can be seen from outside the vehicle. Such pay parking systems, however, are encumbered with a number of serious problems. For instance, administration costs and investment costs are high, as is also the cost of maintenance resulting from malicious damage to the parking meters or ticket dispensers, including the theft of the coins contained therein, such damage requiring constant repair of the meters and dispensers. In order to prevent the theft of the cash content of such parking machines, machines have been introduced with which parking fees are "paid" through the medium of pay cards. Such machines, however, assume that the vehicle owner is in possession of such a card, and also means that the machines must be adapted to accept the majority of pay cards, credit cards, available to the public at large. There is also the risk that climatic conditions will cause such machines to malfunction and, of course, the machines may also be damaged.

The present invention provides a parking system which eliminates the drawbacks of those parking systems known hitherto and enables parking fees to be paid in a simple fashion without needing to pay cash on the occasion of parking the vehicle. The inventive parking system is also cheaper with regard to administration, investments and maintenance. This is achieved with an inventive parking system having the characteristic features set forth in the following Claims.

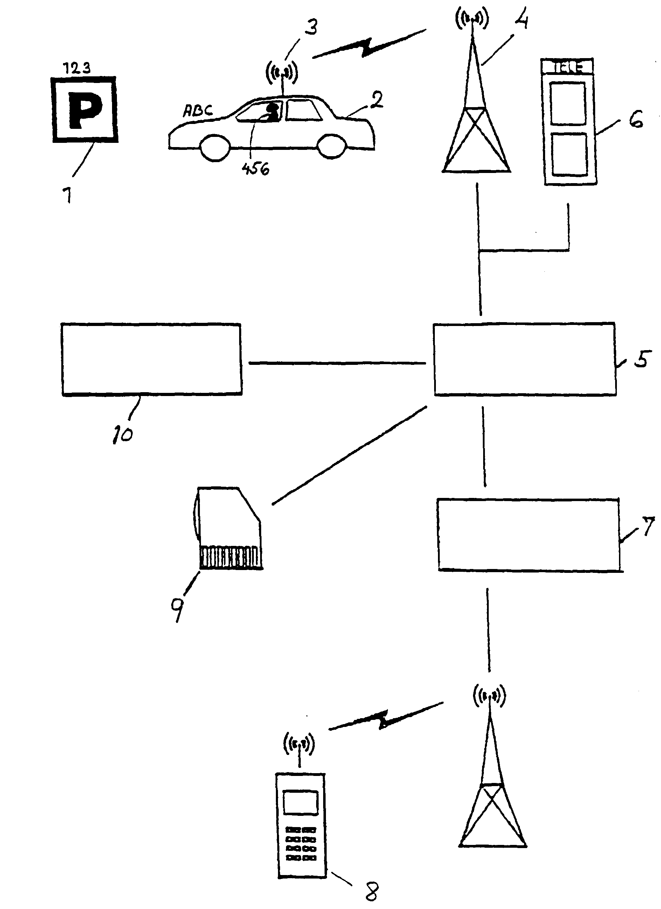

The invention will now be described in more detail with reference to an inventive parking system illustrated schematically in the accompanying drawing.

The drawing illustrates schematically a parking place 1 which has been assigned a numerical and/or alphabetical code which is unique to that particular parking space, for instance 1 2 3, and a vehicle 2 parked in said space. According to the invention, the vehicle is assigned a numerical and/or alphabetical code which is unique to that vehicle. For instance, the code may consist in the whole of the vehicle registration number or parts thereof, for instance A B C. In the illustrated embodiment, it is assumed that the vehicle is equipped with a vehicle telephone, as indicated by the transmitter 3. The driver of the parked vehicle shall be aware of or assigned a unique code which associates the vehicle directly with the one responsible for payment of the parking fee. This code may be 4 5 6, for instance.

The system also utilizes existing base or relay stations, here referenced 4, and a computer centre or database 5.

Having parked the vehicle in the parking space, the driver dials on his/her vehicle telephone - mobile telephone - the code 1 2 3 unique to that parking space, the vehicle code A B C and a personal or payment responsibility code 4 5 6. This code combination is sent via transmitter 3 and the base or relay station 4 to the database 5, in which the time at which the information was received is recorded together with data information concerning the parking space used, the vehicle using the parking space and the person responsible for paying the parking fee. When the driver collects the vehicle from the parking space, he/she again sends the combined code to the database 5, over the vehicle telephone, whereupon the database records that the parking period has been terminated. Data is processed and, for instance, is converted to a form which denotes the place, time and cost of the parking period. According to the invention, this parking cost can be debited by a municipal telephone company, or through the National telephone company, through its normal debiting routines.

As an alternative to a vehicle telephone, it is conceivable to use a telephone located in the vicinity of the parking space, one such telephone being referenced 6 in the drawing, or the parking area can be equipped with a separate transmitter and keyboard for transmission of the parking codes inserted through the keyboard by the person parking the vehicle (not shown). The parking area may be equipped with a separate telephone which is intended solely for vehicle parking purposes.

It is also conceivable to operate the inventive parking system with the aid of a separate code transmitter in the keeping of the person responsible for payment of the parking fee, this transmitter possibly being programmed with the vehicle code and the code of the responsible person, such that solely the code of the parking space need be inserted when parking the vehicle.

The illustrated system may also be coupled to local computer centres 7, for instance so that a parking space can be booked and time checks and parking space follow-ups carried out.

Vehicle parking and parking times can be supervised by a car park superintendent equipped with a portable computer 8 capable of displaying a graphic picture of the parking areas or spaces supervised. The car park superintendent is then able to check with the aid of the computer whether or not the vehicles parked have been registered in a local computer and database. The reference 9 identifies manual supervision in the form of computers which can be connected to the database 5 or a local computer centre 7. This manual supervision, or service, enables the person parking a vehicle to receive supplementary information, to pre-book a parking space and also to request an extension of the parking period when necessary.

An existing vehicle register 10 can also be connected to the database 5, thereby providing the database with information concerning the model of vehicle, colour, etc., for checking the vehicle code - registration number.

Although the inventive parking system has been described with reference to an exemplifying embodiment thereof, it will be understood that various modifications can be made within the scope of the invention as defined in the appended claims. For instance, a parking space can be booked for a specific time or for an unspecified length of time, and it is possible for the driver of a parked vehicle to be called on his/her telephone at a given time prior to expiration of the parking period, to remind the driver that the parking period is about to expire or to extend the parking period when necessary. Booking of a parking period can be confirmed, for instance, by a telephone voice or a digital display. The database 5 may consist of a computer which is central to the country concerned, to which the local computer centres 7 are connected for parking follow-ups, booking, time checks, and the parking fee can be paid, for instance, via the telephone bill, payment card, a separate parking card or in some other way, as before indicated.

The inventive parking system renders the use of pay machines and parking meters obsolete, therewith saving costs. The inventive system also provides a convenience whereby the motorist can obtain automatically information concerning available parking spaces, among other things. The subscription fee for long-term parking and residential parking can be administered readily and differential parking fees in accordance with parking zones, payment of said fees, etc., can be readily achieved. The inventive system also provides for flexible use of existing parking areas.

The inventive parking system also enables parking to be effectively supervised, despite large parking areas being supervised with the aid of only a few superintendents. Superintendents equipped with portable computers obtain a comprehensive graphic view of the various parking areas. The parking superintendent also quickly receives information disclosing those parking spaces for which parking has not been paid. The parking system also enables differentiated parking fines to be issued, for instance the payment of an additional parking fee commensurate with to parking time in excess of the initially recorded time period.

Computer integration enables the inventive system to be modified, improved and adapted constantly without further requirement for expensive investment.

## Claims

1. A vehicle parking system, comprising
- a database (5) and
- means for sending, in conjunction with parking a vehicle in a car park and in conjunction with terminating a parking period, a unique code assigned to the vehicle driver to the database;
- said database having means for registration of the parking period and for determining the parking fee and the address to which the parking fee shall be debited, on the basis of the data received,
**characterized** in that
- each parking space of the car park is asssigned a unique digital and/or alphabetical code,
- said sending means being adapted to send to said database together with said unique code assigned to the vehicle driver, in conjunction with parking the vehicle in a parking space and terminating a parking period, also a unique code assigned to the vehicle and the unique code assigned to that parking space which is occupied by said vehicle.

2. A parking system according to Claim 1, **characterized** in that the unique vehicle code is comprised of the vehicle registration characters or parts of said characters.

3. A parking system according to any one of Claims 1 - 2, **characterized** in that the means for sending said codes to the database comprise a cordless transmitter or a cable transmission.

4. A parking system according to any one of Claims 1 - 2, **characterized** in that the means for sending said codes comprise a telephone.

5. A parking system according to any one of the preceding Claims, **characterized** in that the means for sending said codes comprise a transmitter which is programmed with the vehicle code and the code of the addressee.

## Patentansprüche

1. Fahrzeug-Parksystem enthaltend
- eine Datenbank (5) und
- Mittel zum Senden eines einzigartigen, dem Fahrzeug-Fahrer zugeordneten Codes an die Datenbank in Verbindung mit dem Parken eines Fahrzeugs in einem Parkbereich und in Verbindung mit dem Beenden einer Parkdauer,
- wobei die Datenbank Mittel zum Registrieren der Parkdauer und zum Bestimmen der Parkgebühr und der Adresse, welcher die Parkgebühr belastet werden soll, auf der Basis der erhaltenen Daten aufweist,
**dadurch gekennzeichnet**,
- daß jedem Parkplatz des Parkbereiches ein einzigartiger digitaler und/oder alphabetischer Code zugeordnet ist,
- daß die Sendemittel so angepaßt sind, daß sie der Datenbank zusammen mit dem einzigartigen Code, welcher dem Fahrzeug-Fahrer zugeordnet ist, in Verbindung mit dem Parken des Fahrzeugs auf einem Parkplatz und Beenden einer Parkdauer auch einen einzigartigen Code senden, welcher dem Fahrzeug zugeordnet ist, und den einzigartigen Code, welcher dem Parkplatz zugeordnet ist, welcher durch das Fahrzeug belegt wird.

2. Parksystem nach Anspruch 1,
**dadurch gekennzeichnet,**
daß der einzigartige Fahrzeugcode aus den Fahrzeugzulassungzeichen oder Teilen dieser Zeichen besteht.

3. Parksystem nach einem der Ansprüche 1 bis 2,
**dadurch gekennzeichnet,**
daß die Mittel zum Senden der Codes an die Datenbank einen schnurlosen Sender oder eine Kabelübertragung enthalten.

4. Parksystem nach einem der Anspr che 1 bis 2,
**dadurch gekennzeichnet,**
daß die Mittel zum Senden der Codes ein Telefon enthalten.

5. Parksystem nach einem der vorhergehenden Ansprüche,
**dadurch gekennzeichnet,**
daß die Mittel zum Senden der Codes einen Sender enthalten, welcher mit dem Fahrzeugcode und dem Code des Adressaten programmiert ist.

## Revendications

1. Un système de parcage de véhicule, comprenant
- une base de données (5) et
- des moyens pour envoyer, à la base de données, en liaison avec le parcage d'un véhicule dans un parking et en liaison avec la fin d'une période de parcage, un code particulier attribué au conducteur du véhicule ;
- ladite base de données présentant des moyens pour l'enregistrement de la période de parcage et pour la détermination du montant de parcage ainsi que de l'adresse à laquelle le montant du parcage doit être débité, sur la base des données reçues,
**caractérisé** en ce que
- à chaque espace de parcage est attribué un code numérique et/ou alphabétique particulier,
- lesdits moyens d'envoi étant adaptés pour envoyer à ladite base de données, en même temps que ledit code particulier attribué au conducteur du véhicule, en liaison avec le parcage du véhicule dans un espace de parcage et avec la fin d'une période de parcage, également un code particulier attribué au véhicule et le code particulier attribué à cet espace de parcage qui est occupé par ledit véhicule.

2. Un système de parcage selon la revendication 1, **caractérisé** en ce que le code particulier du véhicule est composé des caractères d'immatriculation du véhicule ou d'une partie desdits caractères.

3. Un système de parcage selon l'une quelconque des revendications 1 à 2, **caractérisé** en ce que les moyens pour envoyer lesdits codes à la base de données comprennent un émetteur sans fil ou une transmission à câble.

4. Un système de parcage selon l'une quelconque des revendications 1 à 2, **caractérisé** en ce que les moyens pour envoyer lesdits codes comprennent un téléphone.

5. Un système de parcage selon l'une quelconque des revendications précédentes, **caractérisé** en ce que les moyens pour envoyer les codes comprennent un émetteur qui est programmé avec le code du véhicule et le code du destinataire.
